# EUROPEAN PATENT APPLICATION

(11) **EP 2 762 227 A1**
(43) Date of publication of application: **06.08.2014**
(21) Application number: 12835764.7
(22) Date of filing: 30.08.2012
(51) Int. Cl.: B01J 19/08, H01T 23/00

(54) **ACIDIC COMPONENT GENERATOR**

(30) Priority: 30.09.2011 JP 2011217343
(71) Applicant: Panasonic Corporation, Kadoma-shi, Osaka 571-8501 (JP)
(72) Inventor: KOMURA, Yasuhiro, Osaka 540-6207 (JP); SUDA, Hiroshi, Osaka 540-6207 (JP); ASANO, Yukiyasu, Osaka 540-6207 (JP); IMAI, Takeshi, Osaka 540-6207 (JP); MISHIMA, Yukiko, Osaka 540-6207 (JP); OE, Jumpei, Osaka 540-6207 (JP); SUMIMOTO, Ayaka, Osaka 540-6207 (JP)
(74) Representative: Grünecker, Kinkeldey, Stockmair & Schwanhäusser
(86) International application number: PCT/JP2012/071983
(87) International publication number: WO 2013/047077

(57) **Abstract**

An acidic component generator includes a discharge electrode (1) and a voltage supply (3). The voltage supply (3) is configured to apply a high frequency voltage to the discharge electrode (1) to discharge electricity, thereby ganerating an acidic component.

## Description

### TECHNICAL FIELD

The present invention relates to an acidic component generator configured to discharge electricity to genelate an acidic component.

### BACKGROUND ART

As a prior art, for example, JP2010-196959A discloses a device configured to discharge electricity to generate an acidic component such as nitrate ion or nitrogen oxide.

### SUMMARY OF INVENTION

In order to discharge electricity to generate a large quantity of acidic component, it could be thought to increase an voltage applied to an electrode, but there is a concern that an arc discharge would occur in this case. If such arc discharge occurs, it is difficult to generate the large quantity of acidic component as a result of wasted energy consumption. Additionally, there are problems of uncontrollable electric discharge and generation of sounds.

The present invention has been achieved in view of the above circumstances, and an object thereof is to provide an acidic component generator which enables generating a large quantity of acidic component while suppressing occurrence of an arc discharge.

An acidic component generator of the present invention comprises a discharge electrode and a voltage supply. The voltage supply is configured to apply a high frequency voltage to the discharge electrode to discharge electricity, thereby generating an acidic component.

Another acidic component generator of the present invention comprises a discharge electrode, a counter electrode facing the discharge electrdoe, and a voltage supply. The voltage supply is configured to apply a high frequency voltage to the counter electrode to discharge electricity, thereby generating an acidic component.

In addition, the voltage supply is preferably configured to apply the high frequency voltage having a frequency in a range of 50 kHz to 250 kHz.

In addition, the voltage supply is preferably configured to apply the high frequency alternating-current voltage.

In accordance with the present invention, it is possible to generate a large quantity of acidic component while suppressing occurrence of an arc discharge.

### BRIEF DESCRIPTION OF DRAWINGS

Figure 1 is an explanatory diagram showing an acidic component generator of a first embodiment;
   Figure 2 is a graph showing voltage waveforms obtained from a voltage supply configured to apply an alternating-current voltage where a center value thereof locates at 0 V;
   Figure 3 is a graph showing voltage waveforms obtained from a voltage supply configured to apply an alternating-current voltage where a center value thereof locates at a negative region;
   Figure 4 is a graph showing voltage waveforms obtained from a voltage supply configured to apply a voltage which is a negative voltage at all times;
   Figure 5 is a graph showing voltage waveforms obtained from a voltage supply configured to apply a negative voltage where a discharging start voltage is in a range of an amplitude of the applied negative voltage;
   Figure 6 is a graph showing voltage waveforms obtained from a voltage supply configured to apply a negative voltage which is higher than a discharging start voltage; and
   Figure 7 is an explanatory diagram showing an acidic component generator of a second embodiment.

### DESCRIPTION OF EMBODIMENTS

Embodiments of the present invention will be described with referen to accompanying drawings.

### (First embodiment)

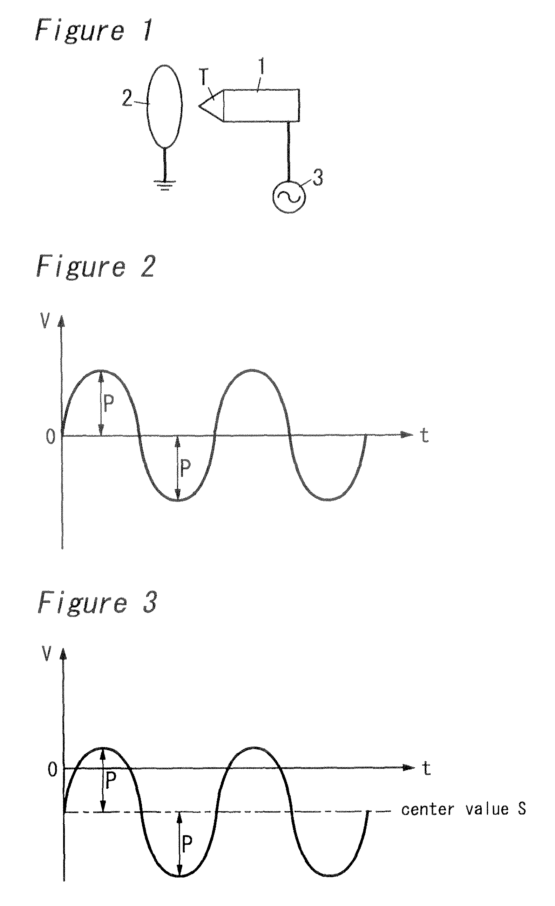

An acidic component generator of a first embodiment as shown in Figure 1 includes a discharge electrode 1, a counter electrode 2 facing the discharge electrode 1, and a voltage supply 3 configured to apply a voltage to the discharge electrode 1.

The discharge electrode 1 is made of metal, but a shape thereof is not especially limited. As an example, it may be an electrode like a straight piece of which a head "T" is sharpened like a cone.

The counter electrode 2 is shaped like a ring, and is provided at a position opposed to the head of the discharge electrode 1 with the counter electrode 2 grounded. Moreover, the counter electrode 2 is configured to generate a potential difference between the counter electrode 2 and the discharge electrode 1. That is, the voltage applied from the voltage supply 3 is to be discharged toward an outside of the counter electrode 2.

The voltage supply 3, for example, is formed of an electronic oscillator or the like which includes a piezoelectric element. The voltage supply 3 is connected to the discharge electrode 1.

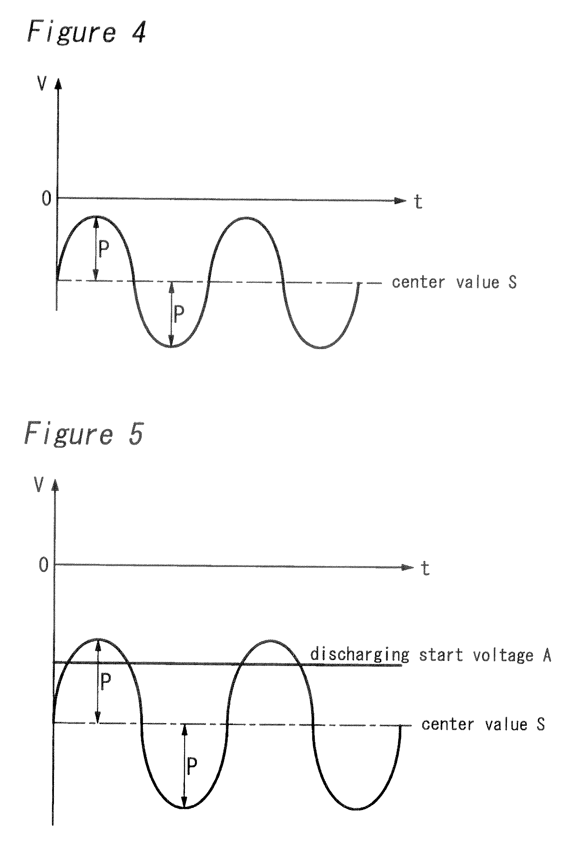

The voltage applied from the voltage supply 3 to the discharge electrode 1 is a high frequency voltage having a frequency in a range of 50 kHz to 250 kHz. When a frequency of the above voltage is less than 50 kHz, there is a possibility that an acidic component is not effectively generated, because the accumulate of an air ion, which is generated in the air, such as a nitrogen ion and an oxygen ion is reduced between electrodes which are the head T of the discharge electrode 1 and the counter electrode 2. Also when the frequency is more than 250 kHz, there is a possibility that an arc discharge tends to occur owing to change in state of electric discharge. Although the voltage is an alternating-current voltage where a center value thereof locates at 0 V as shown in Figure 2, the voltage may be an alternating-current voltage where a center value thereof locates at a negative region as shouwin in Figure 3. Also the voltage may be a negative voltage at all times as shown in Figure 4. Also the voltage is the high frequency voltage, but waveforms thereof are not limited to sine waves. In this case, an amplitude "P", which is a potential difference from the center value "S", is preferably set in a range of 1 kV to 5 kV at an absolute value.

The voltage supply 3 is configured to apply the high frequency voltage to the discharge electrode 1 to discharge electricity, and therefore it is possible to generate the acidic component such like nitrate ion or nitrogen oxide of nitrogen dioxide or the like. The acidic component such like nitrogen dioxide or nitrate ion is, for example, to be supplied to hair, skin, head skin or the like. It is known that when the healthy hair, skin, head skin or the like has an alkalinity, resistance thereof against microorganism such like bacteria and fungus becomes weaker. By suppling the generated acidic component onto hair, skin, head skin or the like, it is possible that hair, skin, head skin or the like becomes to have mild acidity.

In the present embodiment, in order to discharge electricity, the high frequency voltage is applied to the discharge electrode 1, and therefore it is possible to suppress the transition of the discharge to an arc discharge. That is, as shown in Figures 2 and 3, when the voltage applied to the discharge electrode 1 is a high frequency voltage and an alternating-current voltage, the air ions, which are generated in the air, such like nitrogen ions and oxygen ions are accumulated in a space which is a space between the haed T of the discharge electrode 1 and the counter electrode 2, by effects of the alternating-current voltage which is the high frequency voltage and varies between positive and negative alternately. Consequently, since much energy stably spends to generate the acidic component, and the arc discharging is surpressed, it is possible to generate a large quantity of acidic component. Also, the applied voltage is lower than a discharging start voltage "A" temporarily, and therefore the arc discharge is prevented from occurring continually.

Even when the voltage applied to the discharge electrode 1 is a nagative voltage at all times as show in Figure 4, it is possible to suppress the transition of the discharge to an arc discharge. For example, when a maximum value of the applied voltage in a positive direction thereof is over the discharging start voltage "A" as shown in Figure 5, as similar to the above, the arc discharge is prevented from occurring continually because the applied voltage is lower than the discharging start voltage "A" temporarily. For this case, an amplitude "P", which is a potential difference from the center value "S", is preferably set in a range of 1 kV to 5 kV at an absolute value.

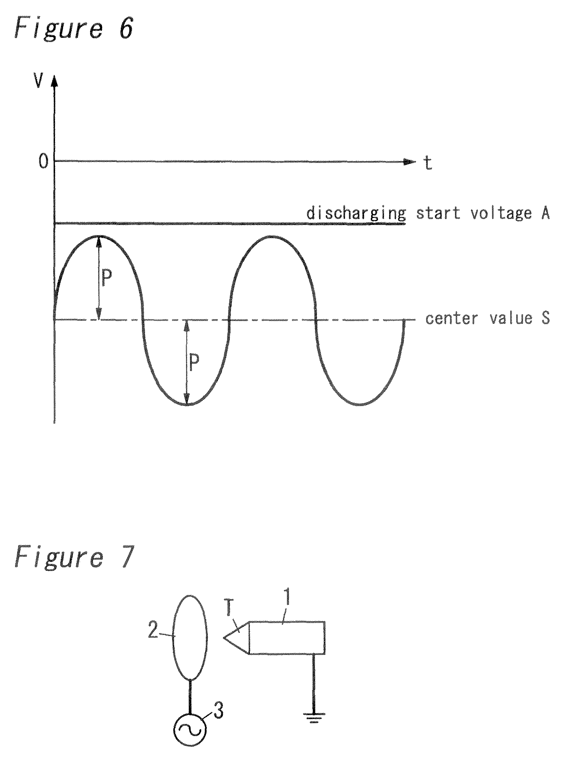

Even when the applied voltage is higher than the discharging start voltage "A" as shown in Figure 6, the arc discharge is prevented from occurring continually as follows. That is, when the applied voltage is a direct-current voltage, an electric discharge is to occur at only one point of a closest distance between the electrodes. On the other hand, when the applied voltage is the high frequency voltage, which has a frequency in a range of 50 kHz to 250 kHz, electric discharges occur at a large number of points, because differences in impedance (resistance) between electrodes are unaffected by small differences in distance between electrodes by not only a resistance value between the electrodes but also capacitance of capacitor and so on. Thus, when the applied voltage is the high frequency voltage, it is possible to suppress the transition of the arc discharge. Moreover, also in this case, an amplitude "P", which is a potential difference from the center value "S", is preferably set in a range of 1 kV to 5 kV at an absolute value.

Also in the present embodiment, since the voltage supply 3 is configured to apply the high frequency voltage having the frequency in the range of 50 kHz to 250 kHz, it is possible to generate the large quantity of acidic component and also to reduce a cost and size for the voltage supply 3.

In addition, the counter electrode 2 of the present embodiment is provied to enhance electric field strength between the counter electrode 2 and the discharge electrode 1 to generate the large quantity of acidic component, and may be omitted.

### (Second embodiment)

A second embodiment is now expleained. In the following embodiment, like kind elements are assigned the same reference numerals as depicted in the first embodiment, and redundant explanation is omitted.

In an acidic component generator according to the present embodiment shown in Figure 7, a voltage supply 3 is connected to a counter electrode 2, and a discharge electrode 1 is grounded. Also the discharge electrode 1 is configured to make a potential difference between the discharge electrode 1 and the counter electrode 2. That is, a voltage applied from the voltage supply 3 is to be discharged outside from the discharge electrode 1. The voltage applied from the voltage supply 3 to the counter electrode 2 is a high frequency voltage as shown in Figures 2 to 6 like the first embodiment, and also has a frequency in a range of 50 kHz to 250 kHz like the first embodyment. For this case also, an amplitude "P", which is a potential difference from a center value "S", is preferably set in a range of 1 kV to 5 kV at an absolute value.

In the present embodiment, it is possible to suppress an arc discharge and to generate a large quantity of acidic component like the first embodiment,.

Additionally, in each of the embodiments described above, a voltage appiled from a voltage supply 3 to a discharge electrode 1 or a counter electrode 2 may be a high frequency voltage having a frequency out of a range of 50 kHz to 250 kHz.

## Claims

1. An acidic component generator comprising;
a discharge electrode; and
a voltage supply,
wherein
the voltage supply is configured to apply a high frequency voltage to the discharge electrode to discharge electricity, thereby ganerating an acidic component.

2. An acidic component generator comprising;
a discharge electrode;
a counter electrode facing the discharge electrdoe; and
a voltage supply,
wherein
the voltage supply is configured to apply a high frequency voltage to the counter electrode to discharge electricity, thereby ganerating an acidic component.

3. The acidic component generator according to claim 1, wherein
the voltage supply is configured to apply the high frequency voltage having a frequency in a range of 50 kHz to 250 kHz.

4. The acidic component generator according to claim 2, wherein
the voltage supply is configured to apply the high frequency voltage having a frequency in a range of 50 kHz to 250 kHz.

5. The acidic component generator according to any one of claims 1 to 4, wherein the voltage supply is configured to apply the high frequency alternating-current voltage.
